# EUROPÄISCHE PATENTANMELDUNG

(11) **EP 1 353 396 A1**
(43) Veröffentlichungstag der Anmeldung: **15.10.2003**
(21) Anmeldenummer: 02008383.8
(22) Anmeldetag: 12.04.2002
(51) Int. Cl.: H01M 8/24, H01M 8/02

(54) **Elektrochemische Zelle oder Anordnung von zwei oder mehr zu einem Stapel aufgeschichteten elektrochemischen Zellen**

(71) Anmelder: Höller, Stefan, 23558 Lübeck (DE); Küter, Uwe, 23558 Lübeck (DE)
(72) Erfinder: Höller, Stefan, 23558 Lübeck (DE); Küter, Uwe, 23558 Lübeck (DE)
(74) Vertreter: Vollmann, Heiko, Dipl.-Ing.

(57) **Zusammenfassung**

Der Aufbau eines Brennstoffzellenstacks der PEM-Bauart erfolgt mittels Montageeinheiten, bei denen jeweils eine Bipolar- oder Endplatte (1) und die Gasdiffusionsschicht (4) mit umgebender Dichtung (9) mittels eines abdeckenden Stützrahmens (10) fixiert sind. Hierdurch wird die Montage erheblich vereinfacht (Fig. 1)

## Beschreibung

Die Erfindung betrifft eine elektrochemische Zelle oder Anordnung gemäß den im Oberbegriff des Anspruchs 1 angegebenen Merkmalen sowie ein Verfahren zu derer Herstellung gemäß den im Oberbegriff des Anspruchs 9 angegebenen Merkmalen.

Elektrochemische Zellen dieser Art sind hinlänglich bekannt, sie werden entweder in Form von Brennstoffzellen zur Gewinnung elektrischer Energie durch katalytische Oxidation eines Brennstoffs, beispielsweise Wasserstoff eingesetzt oder als Elektrolyseur für den Umkehrvorgang, bei dem durch Elektrolyse beispielsweise aus Wasser Sauerstoff und Wasserstoff gewonnen wird. Die hier in Rede stehenden Zellen der PEM-Bauart (**P**roton **E**xchange **M**embran)arbeiten mittels einer gasdichten aber ionendurchlässigen Membran, die zur einer Seite mit einer Anode und zur anderen Seite mit einer Kathode versehen ist. Um diese Elektroden vollflächig mit beispielsweise Gas in Brennstoffzellenbetrieb zu versorgen, sind der Anode und der Kathode Gasdiffusionsschichten zugeordnet, welche zwischen einer Elektrode und einer Platte liegen, die ein zur Gasdiffusionsschicht offenes Kanalnetz aufweist und über welche die eigentliche Gaszufuhr bzw. -abfuhr erfolgt. Wenn die Zellen, was üblich ist, in Stapeln angeordnet werden, dann sind jeweils die endseitigen Zellen mit Platten in Form von Endplatten versehen, die nur auf einer, d.h. zum Zellstapel hin weisenden Seite mit einem Kanalnetz durchzogen sind, wohingegen die innerhalb des Stapels liegenden Platten, die so genannten Bipolarplatten zu beiden Seiten mit einem Kanalnetz durchzogen sind, jeweils zur Versorgung benachbarter Zellen. Der Aufbau derartiger Zellen ist hinlänglich bekannt und beispielsweise in DE 197 03 214 C1 beschrieben.

Je nach Anwendung sind die Zellen ganz oder teilweise abzudichten. Bei Brennstoffzellen ist zumindest die Wasserstoffseite abzudichten, bei Elektrolysezellen hingegen beiden Seiten. Dann ist regelmäßig eine Dichtung vorgesehen, welche die Gasdiffusionsschicht umfangsmäßig umgibt und diesen Bereich nach außen hin abdichtet.

Der Aufbau solcher Zellen, insbesondere bei der gebräuchlichsten Anordnung in Stapeln, ist relativ aufwändig, da die einzelnen Schichten innerhalb der Zelle recht dünn sind und es insbesondere dann, wenn Werkstoffe in Rollenform verarbeitet werden, es zu Verwerfungen der von der Rolle abgelänkten Abschnitte kommen kann, was die Montage erschwert und insbesondere auch die Dichtheit der Zellen beeinträchtigen kann.

Bei den aus DE 197 03 241 C1 bekannten Zellen erfolgt der Zellenaufbau von der Membran aus. Dort sind allerdings Membran, Elektroden und Gasdiffusionsschicht miteinander zu einem flächenförmigen Gebilde gewalzt, das lediglich mit einer Dichtung und dann den Bipolar bzw. Endplatten versehen werden muss. Doch auch hier gestaltet sich der Aufbau aufwändig, da die Dichtung zumindest auf einer Seite der Membran durch einen aufzuspritzenden, aushärtenden Kunststoff erzeugt werden muss. Schon aufgrund der Aushärtezeit des Kunststoffs ist eine kontinuierliche Fertigung regelmäßig nicht möglich, darüber hinaus muss das Auftragen der Dichtungsmasse sehr präzise erfolgen, um die gewünschte Funktion zu gewährleisten.

Es sind jedoch auch Anordnungen bekannt, bei denen die Membran bereits mit den Elektroden versehen ist, die Gasdiffusionsschicht jedoch gesondert aufzulegen ist. Die Gasdiffusionsschicht besteht dann üblicherweise aus ein oder vorzugsweise zwei übereinander liegenden Kohlefaserschichten, welche so an der Membran anliegen, dass die weichere Schicht der Membran zugewandt und die härtere Schicht der Bipolar- bzw. Endplatte zugeordnet ist. Um zu verhindern, dass beim Verspannen des Zellstapels, was üblicherweise nach Aufeinanderlegen sämtlicher Zellen erfolgt, eine Membran durch die vergleichsweise harten Gasdiffusionsschichten beschädigt wird, ist es bekannt, auf der Membran Stützrahmen aufzukleben, welche den Rand der Gasdiffusionsschicht überdecken und im Übrigen an der die Gasdiffusionsschicht umfangseitig umgebenden Dichtung anliegen. Funktionell hat sich die Bauart zwar bewährt, doch gestaltet sich dort die Montage vergleichsweise schwierig, da auf eine exakte Ausrichtung zwischen Dichtungen und Gasdiffusionsschichten geachtet werden muss, was nicht immer einfach ist, wenn sich die Schichten beispielsweise verwerfen.
Vor diesem Hintergrund liegt der Erfindung die Aufgabe zugrunde, eine elektrochemische Zelle der eingangs genannten Art dahingehend auszubilden, dass sie schneller, einfacher und präziser montierbar ist. Weiterhin soll ein Verfahren geschaffen werden, das eine solche vereinfachte Montage in einem möglichst kontinuierlichen Prozess ermöglicht.

Der vorrichtungsmäßige Teil dieser Aufgabe wird durch die in Anspruch 1 angegebenen Merkmale gelöst, der verfahrensmäßige durch die in Anspruch 9 angegebenen Merkmale. Vorteilhafte Ausgestaltungen der Erfindung sind in den Unteransprüchen, der nachfolgenden Beschreibung und der Zeichnung angegeben.

Grundgedanke der vorliegenden Erfindung ist es, die Zelle nicht, wie beim Stand der Technik bekannt, von der Membran ausgehend aufzubauen, sondern von der Bipolar- bzw. Endplatte her. Dabei ist für den Teil der Zelle, welcher eine exakte Abdichtung gewährleisten muss, vorgesehen, die Gasdiffusionsschicht mittels des Stützrahmens an der Bipolar- oder Endplatte festzulegen, so dass Montageeinheiten gebildet werden, die später nur noch unter Eingliederung der Membran und gegebenenfalls der Gasdiffusionsschicht der anderen Seite aufeinander gestapelt und verspannt werden müssen. Dabei sorgt das Festlegen der Gasdiffusionsschicht durch den Stützrahmen dafür, dass diese sicher in ihrer bestimmungsgemäßen Position auf der Bipolar- bzw. Endplatte, innerhalb der Dichtung überdeckt vom Stützrahmen gehalten wird. Dabei können Stützrahmen und Dichtung einteilig oder auch zweiteilig ausgebildet sein. Während der Stützrahmen zweckmäßigerweise mit der Gasdiffusionsschicht und der Dichtung flächig verklebt ist, kann die Dichtung selbst entweder mit der Bipolar- oder Endplatte verklebt oder auch durch Rastmittel befestigt sein. Wenn die Dichtung aus einem üblichen elastischen Werkstoff besteht, so können auf der zu Bipolar- bzw. Endplatte weisenden Seite über die Fläche verteilt Rastnasen vorgesehen sein, welche in entsprechende Ausnehmungen der Platte einrasten können, hierdurch wird nicht nur eine genaue Ausrichtung, sondern auch eine zuverlässige Befestigung während der weiteren Montage sicher gestellt.

Ein besonderer Vorteil ist es, dass der Stützrahmen auf der zur Membran weisenden Seite keinerlei Verbindung benötigt, sondern dort nur lose anliegt, hierdurch kann der Stapel nach der Montage gegebenenfalls noch ausgerichtet werden, ohne dass die Gefahr besteht, dass eine Membran beschädigt wird.

Wie eingangs bereits erläutert, genügt bei luftbetriebenen Brennstoffzellen in der Regel die Abdichtung auf der Wasserstoffseite. Dann wird die Gasdiffusionsschicht auf der anderen Seite lose aufgelegt, eine Gefahr einer fehlerhaften Abdichtung oder Beschädigung der Membran besteht dort nicht, da die Gasdiffusionsschicht die gleiche räumliche Erstreckung wie die Membran aufweist und eine Abdichtung nicht erforderlich ist. Soll hingegen auch diese Seite abgedichtet werden, was beispielsweise beim Betrieb als Elektrolyseur regelmäßig erforderlich ist, dann ist es zweckmäßig, die Bau- bzw. Montageeinheit so auszulegen, dass die Gasdiffusionsschichten zu beiden Seiten der Bipolarplatte durch je einen Stützrahmen gehalten werden. Es wird dann also zunächst die eine Seite der Bipolarplatte mit Gasdiffusionsschicht, Dichtung und Stützrahmen bestückt, wonach die Platte umgedreht und die andere Seite entsprechend bestückt wird. Die so gebildeten Montageeinheiten können dann jeweils unter Eingliederung der Membran in einfacher Weise gestapelt und verspannt werden. Die, die Gasdiffusionsschicht umgebende Dichtung kann, wenn keine speziellen Rastmittel vorgesehen sind, durch Kleben mit der Bipolar- oder Endplatte verbunden werden. Es kann hierzu entweder gesondert bei der Montage Klebstoff aufgetragen werden, die Dichtung mit einem einseitigen Klebfilm versehen sein oder aber die Dichtung direkt aufgespitzt sein.

Die Anzahl der zu montierenden Teile kann dadurch deutlich reduziert werden, dass Stützrahmen und Dichtung einstückig ausgebildet werden. Dies bedingt, dass der Werkstoff so gewählt wird, dass er die für die Dichtung erforderliche Elastizität aufweist, andererseits doch eine ausreichende Stützwirkung zum Schutz der Membran bildet. Konstruktiv ist die Dichtung dann so zu gestalten, dass ein Freiraum gebildet wird, in den die Ränder der Gasdiffusionsschicht formschlüssig eingegliedert werden können. Auch in diesem Fall ist es zweckmäßig zwischen Gasdiffusionsschicht und Stützrahmen eine Klebverbindung vorzusehen, um diese zuverlässig zueinander zu fixieren. Die Verbindung zwischen Dichtung und Bipolar- bzw. Endplatte kann ebenfalls durch Kleben oder durch Rastmittel erfolgen.

Da der Stützrahmen die Gasdiffusionsschicht während der weiteren Montage fixieren soll, ist es erforderlich, dass dieser nicht nur mit der Gasdiffusionsschicht, sondern auch entweder direkt mit der Bipolaroder Endplatte oder aber über die Dichtung mit letzterer vorzugsweise durch Kleben verbunden ist. Grundsätzlich ist es allerdings nicht erforderlich, dass der Stützrahmen mit der Gasdiffusionsschicht verklebt ist, die Teilüberdeckung als solche reicht zum Fixieren aus. Als Stützrahmen können beispielsweise die gleichen klebstoffbeschichteten Folien eingesetzt werden, die auch zum Schutz der Membran direkt auf diese aufgeklebt werden. Dabei kann der Stützrahmen gegebenenfalls auch gleichzeitig die Dichtung an der Bipolar- bzw. Endplatte fixieren, wenn er diese zumindest teilweise überdeckt.

Die gemäß der Erfindung zunächst hergestellten Monatageeinheiten können kontinuierlich produziert werden, wobei in einem weiteren Montageschritt dann diese Montageeinheiten unter Eingliederung von Membranabschnitten und gegebenenfalls Gasdiffusionsschichten zu Zellstapeln zusammengefügt und verspannt werden können. Ein wesentlicher Vorteil dabei ist, dass die empfindlichen Ausrichtarbeiten nicht beim Aufbau des Stapels, sondern beim Aufbau der Monatageeinheit entstehen. Das Arbeitsergebnis ist also wesentlich besser steuerbar und kontrollierbar.

Die Erfindung ist nachfolgend anhand von in der Zeichnung dargestellten Ausführungsbeispielen erläutert. Es zeigen
- Fig.1: in stark vereinfachter Darstellung einen Teilquerschnitt einer Brennstoffzelle eines Brennstoffzellenstapels,
- Fig. 2: eine zweite Ausführungsvariante in Darstellung nach Fig. 1,
- Fig. 3: eine dritte Ausführungsvariante in Darstellung nach Fig. 1,
- Fig. 4: eine vierte Ausführungsvariante in Darstellung nach Fig. 1.

Der grundsätzliche Aufbau der hier in Rede stehenden elektrochemischen Zellen ist hinlänglich bekannt, es wird in diesem Zusammenhang beispielhaft auf DE 195 44 323 A1 und DE 100 38 589 A1 verwiesen. Derartige Zellen sind zu Stapeln aufeinander angeordnet und mit randseitig durchgeführten Zugankern verspannt, dabei besteht ein Zellenstapel in an sich bekannter Weise aus zwei Endplatten, zwischen denen eine Vielzahl von Zellen eingegliedert sind, die jeweils durch so genannte Bipolarplatten 1 voneinander getrennt und elektrisch verbunden sind. Jede Bipolarplatte weist beispielsweise an ihrer Oberseite ein Netz von nach oben offenen Kanälen 2 auf, welche für die Wasserstoffzufuhr vorgesehen sind und nach unten offene Kanäle 3, welche für die Sauerstoffzufuhr in Form von Luft vorgesehen sind. Die Platten selbst sind aus einem kohlenstoffhaltigen und gut leitenden Kunststoff-oder Metallplatten gebildet.

Nach oben hin ist jede Bipolarplatte 1 durch eine Gasdiffusionsschicht 4 abgedeckt, die aus einer vergleichsweise weichen oberen Kohlefaserschicht 5 und einer härteren unteren Kohlefaserschicht 6 aufgebaut ist, die aufeinander liegen und gasdurchlässig sind. Nach oben abgedeckt, wird die Gasdiffusionsschicht 4, d.h. die Kohlefaserschicht 5 durch eine ionendurchlässige gasdichte Membran 7 (PEM-Membran). Während die Membran 7 sich über die gesamte Fläche der Bipolarplatten 1, also auch über den Randbereich 8, wo die Verspannung des Stapels erfolgt, erstrecken, ist die Gasdiffusionsschicht 4 in diesen Randbereich von einer ringförmigen Dichtung 9 umgeben, welche den Raum für die Wasserstoffzufuhr seitlich zwischen Membran 7 und der Bipolarplatte 1 abdichtet.

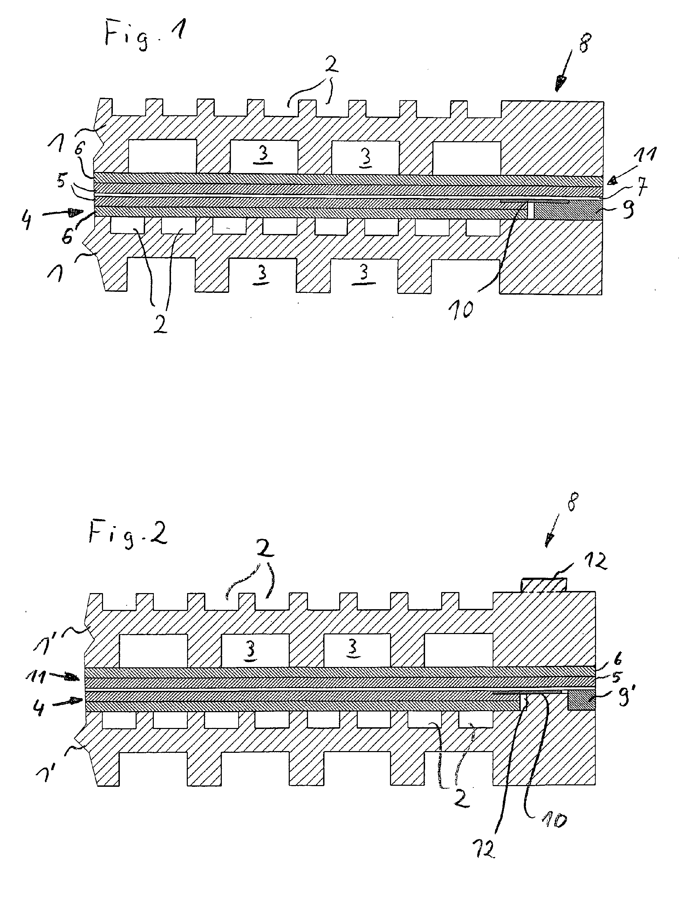

Um zu verhindern, dass sich der Rand der Kohlefaserschicht 5 in die Membran 7 einprägt und diese möglicherweise beschädigt, ist ein Stützrahmen 10 vorgesehen, welcher bei der Ausführung nach Fig. 1 nicht nur den äußeren Rand der Gasdiffusionsschicht 4, insbesondere der Kohlefaserschicht 5 überdeckt, sondern auch einen Teil der Dichtung 9. Entgegen der zeichnerischen Darstellung ist der Stützrahmen 10 auf die Kohlefaserschicht 5 und die Dichtung 9 an der Oberseite aufgeklebt, so dass sich der Stützrahmen 10 über die plane Oberseite dieser Bauteile erstreckt.

Auf der Membran 7 liegt eine Gasdiffusionsschicht 11 auf, die ebenfalls aus einer vergleichsweise weichen unteren Kohlefaserschicht 5 und einer härteren oberen Kohlefaserschicht 6 aufgebaut ist. Die Gasdiffusionsschicht 10 dient der Sauerstoffzufuhr über die luftführenden Kanäle 3, sie ist nicht nach außen hin abgedichtet, weshalb hier keine Dichtung vorgesehen ist und sich diese Schicht über die gesamte Membran 7 erstreckt.

Der Aufbau eines Zellenstacks aus Zellen gemäß Fig. 1 erfolgt der Gestalt, dass zunächst Bipolarplatten 1 an der wasserstoffführenden Oberseite im Randbereich 8 mit einer Dichtung 9 versehen werden, diese Dichtung wird mit ihrer Unterseite auf die Oberseite der Bipolarplatte 1 geklebt. So dann werden die entsprechend zugeschnittenen Kohlefaserschichten 6 und dann 5 in den innerhalb der Dichtung 9 verbleibenden Freiraum auf die Bipolarplatte 1 gelegt. Wenn auch die obere Kohlefaserschicht 5 ausgerichtet ist, erfolgt die Anbringung des Stützrahmens 10, der an seiner Unterseite eine Klebschicht aufweist und somit die Kohlefaserschicht 5 mit der Dichtung 9 verbindet. Da die Kohlefaserschicht 6 unter der Kohlefaserschicht 5 liegt und die Dichtung 9 mit der Bipolarplatte 1 durch Kleben verbunden ist, ergibt sich hierdurch eine Montageeinheit, die gehandhabt werden kann, ohne dass die Gefahr besteht, dass sich die Gasdiffusionsschicht 4 als solche oder in sich verschiebt. Wenn eine ausreichende Anzahl derartiger Monateeinheiten gefertigt ist, wird der Zellstapel beginnend von einer unteren Endplatte an aufgebaut, wobei dann diese Montageeinheiten lediglich an der Oberseite mit der Membran 7 und den Kohlefaserschichten 5, 6 der oberen Gasdiffusionsschicht 11 zu versehen sind, wonach die nachfolgende Monatageinheit aufgesetzt werden kann. Da die vorgenannten Bauteile sämtlichst im Bereich der Zuganker des Stapels gelocht sind, ergibt sich durch die aufrechtstehenden Zuganker eine gute Führung, die es erlaubt, die Montageeinheiten sowie die Membran, die Gasdiffusionsschicht 11 ausreichend exakt aufeinander auszurichten.

Wenn nicht nur die Wasserstoff- sondern auch die Sauerstoffseite abzudichten sind, dann wird die Montageeinheit noch dadurch erweitert, dass in gleicher Weise wie an der Oberseite auch an der Unterseite die Gasdiffusionsschicht 11 einschließlich Dichtung durch einen Stützrahmen fixiert wird. Solche Montageeinheiten sind dann lediglich unter Eingliederung entsprechender Membranabschnitte zu einem Stack zu stapeln.

Bei der anhand von Fig. 1 beschriebenen Ausführungsvariante besteht der Stützrahmen 10 aus einer 0,05 mm dicken, selbstklebenden Polyesterfolie. Die Dichtung 9 besteht beispielsweise aus Viton und ist entweder an der Unterseite selbstklebend oder wird bei der Montage mit Klebstoff versehen. Alternativ kann zwischen der Oberseite der Bipolarplatte und der Unterseite der Dichtung auch eine Rastverbindung vorgesehen sein, indem entsprechende nach unten vorspringende Rastnasen an der Dichtung und entsprechende Ausnehmungen in der Platte vorgesehen werden. Eine solche Rast- oder Klemmverbindung reicht aus, um die zuverlässige Verbindung der Bauteile während der Montage sicherzustellen.

Die Ausführung gemäß Fig. 2 unterscheidet sich von der vorbeschriebenen dadurch, dass die Bipolarplatte 1' im Randbereich an der Oberseite einen ringförmigen, nach oben vorspringenden Wulst 12 aufweist, zu dessen Außenseite eine Dichtung 9' und zu dessen Innenseite die Gasdiffusionsschicht 4 angeordnet ist. Bei dieser Ausführungsform ist der Stützrahmen 10 auf der Oberseite des Wulstes 12 aufgeklebt, verbindet also die Kohlefaserschicht 5 unmittelbar mit der Bipolarplatte 1. Die Dichtung 9' ist ebenfalls eingeklebt, es ist jedoch denkbar, hier auch eine durch Eigenspannung auf dem Wulst 12 sitzende Dichtung vorzusehen, so dass ein Klebvorgang entfallen kann.

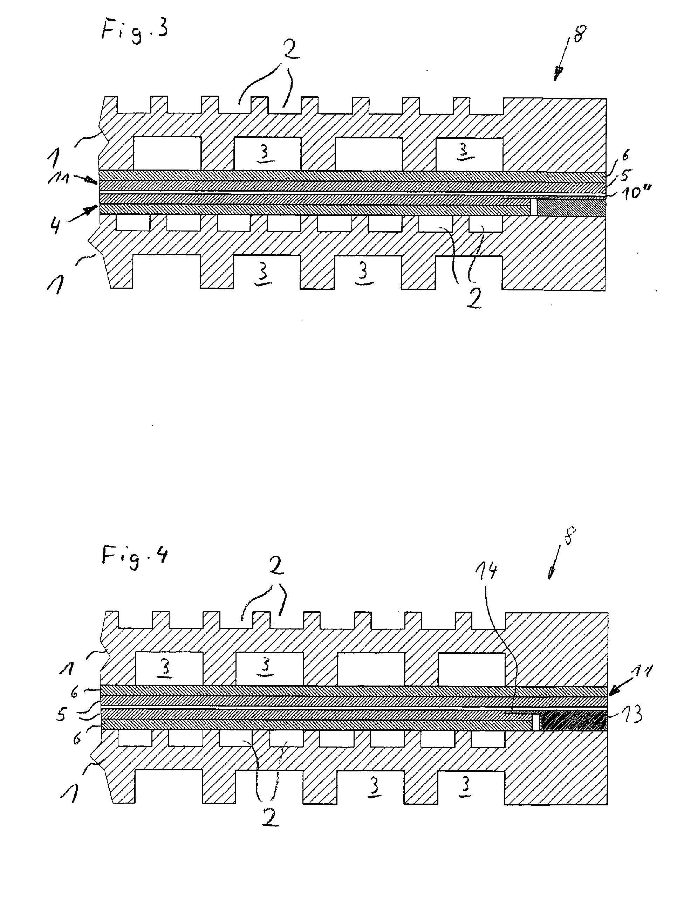

Die Ausführung gemäß Fig. 3 unterscheidet sich von der gemäß Fig. 1 dadurch, dass ein Stützrahmen 10' vorgesehen ist, der sich über die gesamte Dichtung 9 erstreckt. Der Stützrahmen 10' erstreckt sich also über den gesamten Randbereich 8 der Bipolarplatte 1 und fängt den durch die Bipolarplatte in den Stapel eingeleiteten Druck über die gesamte Randfläche ab.

Die Ausführung gemäß Fig. 4 zeigt eine Variante, bei der Stützrahmen und Dichtung einstückig in Form eines Bauteils 13 ausgebildet sind. Es handelt sich hierbei um einen ringförmigen Körper aus elastischen Material (Viton) der nach innen hin einen die Gasdiffusionsschicht 4 überragenden Kragen 14 aufweist, der den eigentlichen Stützkörper bildet und die Kohlefaserschichten 5 und 6 in der vorbestimmten Position der Montageeinheit hält. Das Bauteil 13 ist mit der Unterseite auf der Bipolarplatte 1 verklebt, auch hier kann gegebenenfalls eine Rastverbindung vorgesehen sein.

### Bezugszeichenliste

- 1/1' -: Bipolarplatte
- 2 -: Kanäle für Wasserstoff
- 3 -: Kanäle für Luft
- 4 -: Gasdiffusionsschicht
- 5 -: Kohlefaserschicht weich
- 6 -: Kohlefaserschicht hart
- 7 -: Membran
- 8 -: Randbereich
- 9/9' -: Dichtung
- 10/10' -: Stützrahmen
- 11 -: Gasdiffusionsschicht
- 12 -: Wulst
- 13 -: Stützrahmen und Dichtung
- 14 -: Kragen

## Patentansprüche

1. Elektrochemische Zelle oder Anordnung von zwei oder mehr zu einem Stapel aufgeschichteten elektrochemischen Zellen, insbesondere Brennstoffzelle oder Elektrolysezelle, bei der jede Zelle eine gasdichte und ionendurchlässige Zellmembran (7) aufweist, sowie eine Anode zu einer Seite der Membran (7) und eine Kathode zur anderen Seite der Membran (7), eine Gasdiffusionsschicht (4,11) und eine Bipolar- oder Endplatte (1) zu jeder Seite der Membran (7), und einen Stützrahmen (10) an mindestens einer Seite jeder Membran (7), der zwischen der Membran (7) und einer Gasdiffusionsschicht (4) den Randbereich letzterer überdeckend angeordnet ist, **dadurch gekennzeichnet, dass** die Gasdiffusionsschicht (4) mittels des Stützrahmens (10) an der Bipolar- oder Endplatte (1) festgelegt ist.

2. Anordnung nach Anspruch 1, **dadurch gekennzeichnet, dass** der Stützrahmen (10) an der Membran (7) nur anliegt.

3. Anordnung nach einem der vorhergehenden Ansprüche, **dadurch gekennzeichnet, dass** die Gasdiffusionsschichten (4) zu beiden Seiten einer Bipolarplatte (1) mittels Stützrahmen (10) festgelegt sind.

4. Anordnung nach einem der vorhergehenden Ansprüche, **dadurch gekennzeichnet, dass** eine die Gasdiffusionsschicht (10) umgebende Dichtung (9) vorgesehen ist, welche durch Kleben oder Rastmittel an der Bipolar- oder Endplatte (1) festgelegt ist.

5. Anordnung nach einem der vorhergehenden Ansprüche, **dadurch gekennzeichnet, dass** die Dichtung (13) und der Stützrahmen (14) einstückig und aus einem elastischen Werkstoff ausgebildet sind.

6. Anordnung nach einem der vorhergehenden Ansprüche, **dadurch gekennzeichnet, dass** der Stützrahmen (10) durch einen Folienzuschnitt gebildet ist, der mit der Gasdiffusionsschicht (4) durch Kleben verbunden ist.

7. Anordnung nach einem der vorhergehenden Ansprüche, **dadurch gekennzeichnet, dass** der Stützrahmen (10) auch mit der Bipolaroder Endplatte (1) und/oder der Dichtung (9') durch Kleben verbunden ist.

8. Anordnung nach einem der vorhergehenden Ansprüche, **dadurch gekennzeichnet, dass** der Stützrahmen (10) an seiner von der Membran (7) abgewandten Seite eine Klebschicht aufweist.

9. Verfahren zur Herstellung einer elektrochemischen Zelle der PEM Bauart oder eines daraus gebildeten Zellstapels, **dadurch gekennzeichnet, dass** zunächst eine aus Bipolar- oder Endplatte, Gasdiffusionsschicht, diese umgebenden Dichtung und einem die Gasdiffusionsschicht seitlich überdeckenden Stützrahmen bestehende Montageeinheit gebildet wird, wonach der weitere Zell- oder Zellstapelaufbau erfolgt.

10. Verfahren nach Anspruch 9, **dadurch gekennzeichnet, dass** eine Montageeinheit gebildet wird, welche zu beiden Seiten der Bipolarplatte eine Gasdiffusionsschicht, eine diese umgebende Dichtung und einen die Gasdiffusionsschicht seitlich überdeckenden Stützrahmen aufweist.
